Europäisches Patentamt

European Patent Office

Office européen des brevets

(11) Veröffentlichungsnummer: **0 361 303 B1**

(19)

(12) **EUROPÄISCHE PATENTSCHRIFT**

(45) Veröffentlichungstag der Patentschrift: **16.12.92**

(21) Anmeldenummer: **89117399.9**

(22) Anmeldetag: **20.09.89**

(51) Int. Cl.⁵: **B29C 45/03**, B29D 22/00

(54) **Spritzgiessmaschine.**

(30) Priorität: **26.09.88 AT 2369/88**

(43) Veröffentlichungstag der Anmeldung:
**04.04.90 Patentblatt 90/14**

(45) Bekanntmachung des Hinweises auf die
Patenterteilung:
**16.12.92 Patentblatt 92/51**

(84) Benannte Vertragsstaaten:
**AT BE CH DE ES FR GB IT LI NL SE**

(56) Entgegenhaltungen:
**DE-A- 3 637 918**
**US-A- 4 106 887**

(73) Patentinhaber: **Engel Maschinenbau Gesellschaft m.b.H.**

**A-4311 Schwertberg(AT)**

Patentinhaber: **HYDAC TECHNOLOGY GMBH
Postfach 1251
W-6603 Sulzbach/Saar(DE)**

(72) Erfinder: **Steinbichler, Georg
Bruckmühl 66
A-8786 Rottenmann(AT)**
Erfinder: **Lampl, Alfred
Schacherbergstrasse 2
A-4311 Schwertberg(AT)**

(74) Vertreter: **Hofinger, Engelbert et al
Torggler-Hofinger Wilhelm-Greil-Strasse 16
A-6020 Innsbruck(AT)**

## Beschreibung

Die Erfindung betrifft eine Spritzgießmaschine nach dem Oberbegriff des Patentanspruches 1.

Es sind Spritzgießmaschinen bekannt geworden, bei denen während des Einspritzens des Kunststoffs in das Formwerkzeug bzw. nach dem Einspritzen des Kunststoffs und vor öffnen des Formwerkzeugs ein Gas, vorzugsweise Stickstoff, in das Formwerkzeug eingeblasen wird. Da dieses Gas in den noch nicht erhärteten Kunststoff eingespritzt wird, bildet er im Spritzling einen Hohlraum, was insbesondere bei sehr voluminösen Spritzlingen zu einer oft bedeutenden Materialeinsparung führt.

Bei bekannten derartigen Einrichtungen, wie sie etwa in GB-A-2 139 548 beschrieben sind, wird dem Kolbenspeicher genau jene Gasmenge zugeführt, welche zur Einpressung in das Formwerkzeug bestimmt ist. Durch Verschieben des Kolbens des Kolbenspeichers wird diese definierte Gasmenge auf den Druck gebracht, mit dem die Einführung des Gases in das Formwerkzeug erfolgen soll. Da die einzuführenden Mengen ganz davon abhängen, welcher Gegenstand hergestellt werden soll, und auch der Einspritzdruck des Gases in weiten Grenzen, etwa zwischen 40 und 200 bar, variiert, ist die Ausgangsstellung des Kolbens des Kolbenspeichers von Fall zu Fall verschieden.

In der DE-A1-36 37 918 ist eine Vorrichtung zum Einführen eines Gases in die durch die Düse eines Spritzkopfes in eine Spritzform eingebrachte thermoplastische Kunststoffschmelze beschrieben, die aus einem Dosierzylinder und einem darin verschiebbaren Dosierkolben für die Bestimmung der jeweils in die Spritzform einzupressenden Gasmenge besteht. Der Dosierzylinder ist abwechselnd mit der Gas-Lieferquelle und der Spritzform verbindbar. Zur Erzeugung hoher Drücke in dem Gas ist dabei der Dosierkolben des Dosierzylinders Teil eines Druckübersetzers.

Die Aufgabe der Erfindung liegt darin, die Gasrückgewinnung zu erleichtern.

Dies wird erfindungsgemäß dadurch erreicht, daß zur an sich bekannten Rückgewinnung des Gases das Formwerkzeug über eine mindestens ein Schaltventil aufweisende Abfuhrleitung mit der Einrichtung zur Erhöhung des Gasdruckes verbunden ist.

Der Vorratsbehälter ist im allgemeinen eine handelsübliche Druckgasflasche, die beispielsweise einen Inhalt von 50 Liter bei 200 bar aufweist. Bei der Vielzahl der Spritzgießzyklen in einer Stunde ist der Verbrauch an Gas beträchtlich. Dies schlägt sich nicht nur in den Kosten des Gases nieder, sondern insbesondere bewirkt es, daß die Gasflaschen relativ oft ausgetauscht werden müssen, was in vielen Fällen eine Unterbrechung der Maschinenarbeitszeit bedeutet, aber auf jeden Fall eine beträchtliche Mehrarbeit vom Bedienungspersonal erfordert. Dazu ist zu bedenken, daß die Manipulation mit den schwerden Stahlflaschen relativ umständlich ist.

In GB-A-2 139 548 ist bereits der Vorschlag gemacht worden, einen Teil des nach dem Erhärten des Kunststoffes nicht mehr benötigten Gases aus dem Hohlraum des hergestellten Gegenstandes in den Vorratsbehälter zurückzuführen. Das funktioniert jedoch nur, solange der Druck des rückgeführten Gases höher ist als jener im Vorratsbehälter. Der erwähnte Vorschlag hat daher auch keine praktische Bedeutung. Wird jedoch, in Ausgestaltung der Erfindung, die Abfuhrleitung mittels einer weiteren Leitung mit dem zweiten Kolbenspeicher verbunden, kann die Rückführung des Gases ohne zusätzliche Maßnahmen bis herunter zu einem Gasdruck erfolgen, welcher jenem entspricht, mit dem das dem Vorratsbehälter nachgeschaltete Druckminderventil frisches Gas dem zweiten Kolbenspeicher zuführt. Nur nach Unterschreitung dieses Druckes ist es sinnvoll, Restgas in die Atmosphäre abzuleiten, um den zweiten Kolbenspeicher nicht unnötig groß machen zu müssen.

Weitere vorteilhafte Merkmale ergeben sich aus den Unteransprüchen.

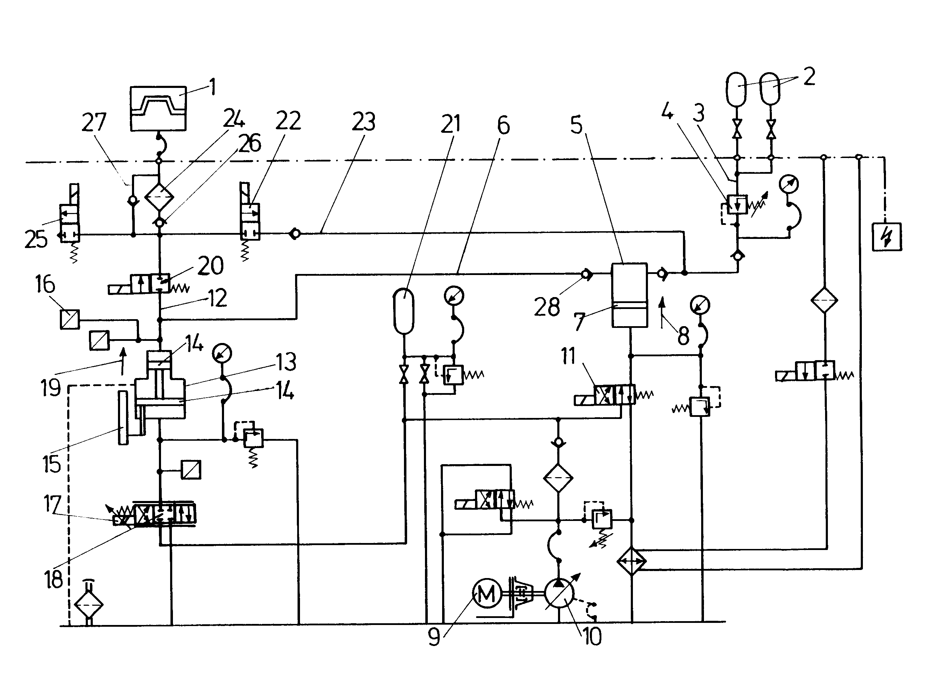

Ein Ausführungsbeispiel der Erfindung wird nachstehend anhand der Zeichnung erläutert, in deren einziger Figur das Schaltschema der Gaszufuhr für die erfindungsgemäße Spritzgießmaschine dargestellt ist.

In der Zeichnung ist auch das Formwerkzeug 1 nur schematisch dargestellt. Die Gasquelle ist durch herkömmliche Stahlflaschen mit einem Inhalt von 50 Liter Stickstoff bei 200 bar gebildet.

Von den Stahlflaschen 2 gelangt das Gas über eine Leitung 3 und ein Druckminderventil 4 in einen Kolbenspeicher 5. Das Gas hat nach dem Passieren des Druckminderventils einen Druck von ca. 5 bar. Durch das Einschalten des Kolbenspeichers 5 und des Minderventils 4 ist es also möglich, die Stahlflaschen 2, die die Gasquelle bilden, weitgehend zu entleerne.

Im Ausführungsbeispiel sind zwei Stahlflaschen 2 vorgesehen, damit ein Austauschen einer gelerten Stahlflasche nicht zu einem Unterbrechen des Spritzvorganges führt.

Zur Weiterleitung durch die Zufuhrleitung 6 wird das Gas durch den Kolben 7 des Kolbenspeichers 5 verdichtet. Die Bewegung des Kolbens 7 in der Richtung des Pfeiles 8 erfolgt über eine von einem Elektromotor 9 angetriebene Hydropumpe 10, wobei die Bewegung von einem Schalterventil 11 gesteuert wird.

Von der Zufuhrleitung 6 gelangt das Gas in die Ausgangsleitung 12 des Kolbenspeichers 13, durch den das eigentliche Einblasen des Gases erfolgt. Im Kolbenspeicher 13 befinden sich zwei Kolben 14 mit unterschiedlichem Durchmesser. Die Kolben 14 sind an einen Wegaufnehmer 15 angeschlossen. Es ist weiterhin ein Blasenspeicher 21 vorgesehen, der die Vorschubbewegung der Kolben 14 wesentlich beschleunigt.

Beim Kolbenspeicher 13 befindet sich ein Gasdrucksensor 16, der die Bewegung des Kolbens 7 stoppt, sobald im Gasraum des Kolbenspeichers 13 der gewünschte Druck herrscht. Auf ein Signal von der Schnecke wird über den Schalter 17 der Schieber des als Proportionalventil ausgebildeten Steuerventils 18 geöffnet und die Kolben 14 werden nach vorne in der Richtung des Pfeiles 19 verschoben. Der Stickstoff wird in die geschlossene Form über das offene Ventil 20 eingeblasen und der Druck im Formwerkzeug wird über eine vorbestimmte Zeit gehalten. Während des Einblasens des Gases ist das Ventil 22 geschlossen. Das Ventil 20 bleibt jedoch offen, damit das sich erwärmende Gas aus dem Formwerkzeug 1 teilweise in den Gasraum des Kolbenspeichers 13 zurückfließen kann.

Wenn der Kunststoff im Formwerkzeug 1 erstarrt ist, wird das Ventil 20 geschlossen und das Ventil 22 geöffnet. Nun strömt Gas über die Rücklaufleitung 23 in den als Sammelbehälter dienenden Kolbenspeicher 5 zurück, wobei die (Rücklauf)-Leitung 23 nach dem Druckminderventil in die Leitung 3 einmündet.

Das rückströmende Gas durchströmt einen Filter 24, der verhindert, daß Kunststoffpartikel in das Gasleitungssystem gelangen.

Die dargestellte Einrichtung erlaubt es, mittels des Kolbenspeichers 13 Gas in genau vorbestimmter Weise zuzuführen. Wesentlich hiefür ist, daß sich die Kolben 14 unabhängig von den Besonderheiten des Einzelfalles in genau definierter Ausgangsstellung befinden. In dieser Ausgangsstellung wird der Gasraum vor dem kleineren Kolben 14 durch den Kolbenspeicher 5 über das Rückschlagventil 28 mit einem durch den Sensor 16 genau überwachten Druck gefüllt. Da die vom Wegaufnehmer 15 überwachte Vorwärtsbewegung der Kolben 14 immer von der gleichen Ausgangsstellung ausgeht, ist es relativ einfach, die Zufuhr des Gases zum Formwerkzeug 1 über die Zufuhrleitung 27 in reproduzierbarer Weise vorzunehmen. Die Ausbildung des Kolbenspeichers 13 als Druckübersetzer erleichtert dabei die feinfühlige Steuerung, die Anordnung des Blasenspeichers 21 vermindert die Trägheit der Anordnung so weit wie möglich.

Die Rückgewinnung des durch den Filter 24 gereinigten Gases, welches die Abfuhrleitung 26 durchströmt, erfolgt zunächst dadurch, daß Gas unmittelbar in den Gasraum des Kolbenspeichers 13 zurückgeführt wird, indem die Kolben 14 zurückgezogen werden, anschließend dadurch, daß bei vermindertem Druck das Schaltventil 20 geschlossen und das Schaltventil 22 zum Kolbenspeicher 5 geöffnet wird, sodaß auch dieser nachgefüllt wird. Nur Restgas mit niedrigem Druck wird über das Ventil 25 ins Freie abgeleitet.

**Patentansprüche**

1.  Spritzgießmaschine zur Herstellung von Gegenständen aus Kunststoff in einem Formwerkzeug (1), wobei eine Einrichtung zum Einpressen von Gas in das Formwerkzeug (1) vorgesehen ist, welche Gas von mindestens einem Vorratsbehälter, insbesondere von Gasflaschen (2), über eine Einrichtung zur Erhöhung des Gasdruckes und einen daran anschließenden Speicher, insbesondere einen Kolbenspeicher (13), mittels einer Zufuhrleitung (27) in das Formwerkzeug (1) führt, dadurch gekennzeichnet, daß zur an sich bekannten Rückgewinnung des Gases das Formwerkzeug (1) über eine mindestens ein Schaltventil (22) aufweisende Abfuhrleitung (26,23) mit der Einrichtung zur Erhöhung des Gasdruckes verbunden ist.

2.  Spritzgießmaschine nach Anspruch 1, dadurch gekennzeichnet, daß Zufuhrleitung (27) und Abfuhrleitung (26) über ein Schaltventil (20) mit der Ausgangsleitung (12) des Speichers verbunden sind.

3.  Spritzgießmaschine nach Anspruch 2, dadurch gekennzeichnet, daß die Schaltventile (20 und 22) alternierend zu öffnen sind.

4.  Spritzgießmaschine nach Anspruch 3, dadurch gekennzeichnet, daß bei geschlossenen Schaltventilen (20,22) die Abfuhrleitung (26) über ein Ventil (25) zur Atmosphäre zu öffnen sind.

5.  Spritzgießmaschine nach einem der Ansprüche 1 bis 4, dadurch gekennzeichnet, daß in der Abfuhrleitung (26) ein Filter (24) angeordnet ist.

**Claims**

1.  An injection moulding machine for producing articles from plastics material in a mould tool (1), wherein there is provided a means for forcing gas into the mould tool (1), which carries gas from at least one storage container, in particular gas bottles (2), by way of a means for increasing the gas pressure and a storage means connected thereto, in particular a piston storage means (13), by means of a feed conduit (27) into the mould tool (1), characterised in that the mould tool (1) is connected to the means for increasing the gas pressure by way of a discharge conduit (26, 23) having at least one control valve (22), for the per se known recovery of the gas.

2. An injection moulding machine according to claim 1 characterised in that the feed conduit (27) and the discharge conduit (26) are connected to the outlet conduit (12) of the storage means by way of a control valve (20).

3. An injection moulding machine according to claim 2 characterised in that the control valves (20 and 22) are to be opened alternately.

4. An injection moulding machine according to claim 3 characterised in that, when the control valves (20, 22) are closed, the discharge conduit (26) is to be open to the atmosphere by way of a valve (25).

5. An injection moulding machine according to one of claims 1 to 4 characterised in that a filter (24) is arranged in the discharge conduit (26).

**Revendications**

1. Machine de moulage par injection pour la production d'objets de matière plastique dans un moule (1), un dispositif, qui est prévu pour injecter du gaz dans le moule (1), envoyant dans le moule (1), par un conduit d'arrivée (27), du gaz qui provient d'au moins une cuve de réserve, en particulier de bouteilles de gaz (2), par l'intermédiaire d'un dispositif d'élévation de la pression du gaz et d'un réservoir raccordé à ce dernier, en particulier d'un réservoir à piston (13), caractérisé en ce que, pour la récupération du gaz, connue en soi, le moule (1) est relié par un conduit d'évacuation (26, 23), qui est équipé d'au moins un distributeur (22), au dispositif d'élévation de la pression du gaz.

2. Machine de moulage par injection selon la revendication 1, caractérisée en ce que le conduit d'arrivée (27) et le conduit d'évacuation (26) sont reliés par un distributeur (20) au conduit de sortie (12) du réservoir.

3. Machine de moulage par injection selon la revendication 2, caractérisée en ce que les distributeurs (20, 22) doivent s'ouvrir en alternance.

4. Machine de moulage par injection selon la revendication 3, caractérisée en ce que, lorsque les distributeurs (20, 22) sont fermés, le conduit d'évacuation (26) doit s'ouvrir à l'atmosphère par une soupape (25).

5. Machine de moulage par injection selon l'une des revendications 1 à 4, caractérisée en ce qu'un filtre (24) est monté dans le conduit d'évacuation (26).